# EUROPÄISCHE PATENTANMELDUNG

(11) **EP 4 287 467 A1**
(43) Veröffentlichungstag der Anmeldung: **06.12.2023**
(21) Anmeldenummer: 23176184.2
(22) Anmeldetag: 30.05.2023
(51) Int. Cl.: H02K 3/28, H02K 3/18, H02K 1/14, H02K 11/33, H02K 11/21

(54) **ELEKTROMOTORSYSTEM**

(30) Priorität: 31.05.2022 LU 502199
(71) Anmelder: Ovalo GmbH, 65555 Limburg (DE)
(72) Erfinder:
(74) Vertreter: Hoffmann, Jürgen

(57) **Zusammenfassung**

Die Erfindung betrifft ein Elektromotorsystem beinhaltend einen ersten Elektromotor, der erste Statorspulen aufweist, und beinhaltend einen zweiten Elektromotor, der zweite Statorspulen aufweist. Das Elektromotorsystem zeichnet sich dadurch aus, dass der erste Elektromotor und der zweite Elektromotor denselben Rotor aufweisen und denselben geblechten Statorkern haben, der mehrere erste Wickelzähne, auf die ausschließlich die ersten Statorspulen gewickelt sind, und mehrere zweite Wickelzähne, auf die ausschließlich die zweiten Statorspulen gewickelt sind, aufweist.

## Beschreibung

Die Erfindung betrifft ein Elektromotorsystem beinhaltend einen ersten Elektromotor, der erste Statorspulen aufweist, und beinhaltend einen zweiten Elektromotor, der zweite Statorspulen aufweist.

Es sind Gleichstrommotore bekannt, deren Stator aus einzelnen Statorsegmenten zusammengesetzt sind, wobei die Statorsegmente unterschiedlichen Teilmotoren zugeordnet sind. Beispielsweise ist aus DE 10 2015 120 373 A1 ein bürstenloser Gleichstrommotor bekannt, der einen ersten Teilmotor und einen zweiten Teilmotor aufweist. Der erste Teilmotor und der zweite Teilmotor haben einen gemeinsamen Läufer und jeweils einen eigenen Stator. Der Stator des jeweiligen Teilmotors hat eine Vielzahl von Zähnen und eine Vielzahl von Wicklungen. Die Zähne des ersten Teilmotors und die Zähne des zweiten Teilmotors sind in einer Umfangsrichtung verschachtelt angeordnet oder sind in einer axialen Richtung nebeneinander angeordnet. Der erste Teilmotor und der zweite Teilmotor sind derart konfiguriert, dass sie als ein einziger Motor arbeiten, um eine normale Leistung abzugeben. Wenn einer der Teilmotoren ausfällt, kann der andere Teilmotor unabhängig davon weiter betrieben werden, um die Zuverlässigkeit und die Sicherheit des bürstenlosen Gleichstrommotors zu verbessern.

Aus DE 31 40 034 C2 ist eine kollektorlose Gleichstrommaschine mit verteilter Wicklung bekannt, die mit einer Anzahl von voneinander unabhängigen Statorwicklungen versehen ist, die eine kontinuierliche Arbeitsfolge auch für den Fall sicherstellen, dass in einer der Wicklungen oder in dem die Wicklungen speisenden Versorgungsstromkreis ein Fehler auftritt. Die Gleichstrommaschine beinhaltet einen permanentmagnetischen Rotor mit mindestens n = 2 Polpaaren und einen Stator, dessen Statorwicklungen in n Wicklungssätze zusammengefasst sind. Durch die Wicklungssätze, die unabhängig voneinander von einer getrennten Stromversorgungseinrichtung angesteuert werden, arbeitet die Maschine auch bei Ausfall eines oder mehrerer Stromkreise weiter. Dies hat den Vorteil, dass die Funktionsfähigkeit der Gleichstrommaschine auch bei Ausfall mehrerer Wicklungen durch Unterbrechung oder Kurzschluss erhalten bleibt. Hierzu sind die Wicklungssätze in einem Abstand voneinander anzuordnen, der ausreicht, um ihre gegenseitige magnetische Beeinflussung auf einen vernachlässigbaren Wert zu reduzieren. Die Gleichstrommaschine ist jedoch kompliziert und sehr aufwändig in der Herstellung.

Aus der Patentanmeldung US 2019 372415 A1 ist ein Doppelwicklungsmotor bekannt, der aufgrund einer asymmetrischen Wicklungsstruktur von Spulen und/oder Kernen stabil angetrieben werden kann.

Aus der Patentanmeldung US 2013 241366 A1 ist ein Motor mit einer Rotorbaugruppe und einer Statorbaugruppe zum drehbaren Antrieb der Rotorbaugruppe bekannt. Statorbaugruppe umfasst einen Kern mit Zähnen, die sich radial von dem Körper erstrecken, und mindestens zwei Wicklungssätze, wobei jeder Wicklungssatz Spulen umfasst, die auf die Zähne gewickelt sind. Die mindestens zwei Wicklungssätze umfassen einen ersten Satz zum Antrieb der Rotoranordnung in einem ersten variablen Betriebsbereich und einen zweiten Satz zum Antrieb der Rotoranordnung in einem zweiten variablen Betriebsbereich, der sich vom ersten unterscheidet.

Aus der Patentanmeldung DE 10 2015 226099 A1 ist eine elektrische Maschine für einen Lenkantrieb bekannt, bei der zur Erhöhung der Ausfallsicherheit mehrere Phasenwicklungen vorhanden sind, um mehrere Phasenteilsysteme zu bilden, die in verschiedenen Schaltungen kombiniert werden können.

Aus der Patentanmeldung US 2004 113575 A1 ist eine Elektromotorvorrichtung und ein Servolenksystem bekannt. Es wird vorgeschlagen, zum Zwecke einer erhöhten Ausfallsicherheit anstelle von zwei Aktuatoren einen Elektromotor zu verwenden, der zwei Gruppen von Spulendrähten sowie ein erstes und ein zweites Steuerungssystem aufweist.

Aus der Patentanmeldung CN 11 756 142 A ist ein Elektromotor mit mehreren Spulensätzen bekannt, die auf denselben Statorkern aufgewickelt sind.

Aus der Patentanmeldung US 2019 033 43 99 A1 ist ein Elektromotor bekannt, bei dem ein Ungleichgewicht der elektromagnetischen Kraft auch dann verhindert wird, wenn eine Abnormalität in einem elektrischen Energiesystem auftritt. Der Motor ist mit einer Vielzahl von elektrischen Energiesystemen verbindbar und umfasst: einen Stator mit einer Vielzahl von Erregermagnetpolen, die in einer Umfangsrichtung angeordnet sind, und Spulen, die an den jeweiligen Polen vorgesehen sind, wobei die Spulen für jedes der Systeme einen Satz von drei oder mehr Phasenspulen enthalten, wobei die Spulen die jeweiligen Ströme von drei oder mehr Phasen des entsprechenden Systems führen; und einen Rotor, der relativ zum Stator drehbar ist. Die Spulen des Stators sind so angeordnet, dass die in Umfangsrichtung benachbarten Spulen unterschiedliche Phasen haben und verschiedenen Systemen zugeordnet sind.

Es ist die Aufgabe der vorliegenden Erfindung, ein Elektromotorsystem anzugeben, das einfach herstellbar und flexibel einsetzbar ist.

Die Aufgabe wird durch ein Elektromotorsystem gelöst, das dadurch gekennzeichnet ist, dass der erste Elektromotor und der zweite Elektromotor denselben geblechten Statorkern haben, der mehrere erste Wickelzähne, auf die ausschließlich die ersten Statorspulen gewickelt sind, und mehrere zweite Wickelzähne, auf die ausschließlich die zweiten Statorspulen gewickelt sind, aufweist.

In erfindungsgemäßer Weise wurde erkannt, dass für ein Elektromotorsystem der eingangs genannten Art ganz überraschender Weise ein einziger gemeinsamer geblechter Statorkern verwendet werden kann, der mehrere erste Wickelzähne, auf die ausschließlich die ersten Statorspulen gewickelt sind, und mehrere zweite Wickelzähne, auf die ausschließlich die zweiten Statorspulen gewickelt sind, aufweist. In erfindungsgemäßer Weise wurde insbesondere erkannt, dass keine zusätzlichen Mittel zur Trennung des magnetischen Flusses zwischen einzelnen Wickelzähnen erforderlich sind. Insbesondere sind auch dann keine zusätzlichen Mittel zur Trennung des magnetischen Flusses erforderlich, wenn erste Wickelzähne, die dem ersten Elektromotor zugeordnet sind, und zweite Wickelzähne, die dem zweiten Elektromotor zugeordnet sind, einander benachbart angeordnet sind. Vielmehr hat es sich gezeigt, dass sogar beide Elektromotore des erfindungsgemäßen Elektromotorsystems, bei sehr hoher mechanischer Leistungsabgabe gleichzeitig betreibbar sind, weitgehend ohne dass sich die Elektromotore gegenseitig nachteilig beeinflussen. Allerdings ist es auch möglich, nur den ersten der Elektromotore zu verwenden. In diesem Fall steht der zweite Elektromotor (oder ggf. auch ein dritter) Elektromotor als Ersatzmotor für den Fall zur Verfügung, dass der erste Elektromotor ausfällt. Alternativ oder zusätzlich kann auch vorgesehen sein, dass beispielsweise nach einer Anlaufphase, in der beide Elektromotore gleichzeitig betrieben werden, einer der Elektromotore abgeschaltet wird, um Energie einzusparen.

Der erste Elektromotor und der zweite Elektromotor weisen vorzugsweise denselben, vorzugsweise einzigen, Rotor auf, der relativ zu dem Stator rotierbar angeordnet ist. Insbesondere kann der Rotor rotierbar in dem Statorkern angeordnet sein. Es ist alternativ allerdings auch möglich, dass die Elektromotore als Außenläufer ausgebildet sind und der Rotor den Stator umgibt.

Bei einer besonders kompakten Ausführung ist der Rotor in Axialrichtung mindestens genauso lang, wie der gesamte Statorkern und/oder die ersten Statorspulen und/oder die zweiten Statorspulen und/oder die ersten Wickelzähne und/oder die zweiten Wickelzähne.

Der Rotor kann mehrere, vorzugsweise in Umfangsrichtung symmetrisch und/oder äquidistant angeordnete, Permanentmagnete aufweisen. Insbesondere können die Permanentmagnete relativ zu den Statorspulen derart angeordnet sein, dass die ersten Statorspulen im Betrieb des ersten Elektromotors mit sämtlichen Permanentmagneten zusammenwirken und dass die zweiten Statorspulen im Betrieb des zweiten Elektromotors mit sämtlichen Permanentmagneten zusammenwirken.

Bei einer ganz besonders einfach und kompakt herstellbaren Ausführung weist der Statorkern einen Stapel von, vorzugsweise lamellierten und isolierten, Elektroblechen auf, von denen jedes erste Abschnitte, die Bestandteil der ersten Wickelzähne sind, und zweite Abschnitte, die Bestandteil der zweiten Wickelzähne sind, aufweist. Falls das Elektromotorsystem noch weitere Elektromotore aufweist, können in analoger Weise dritte, vierte, usw. Abschnitte, die Bestandteil der dritten, vierten usw. Wickelzähne sind, vorhanden sein. Die Elektrobleche können stoffschlüssig und/oder formschlüssig und/oder kraftschlüssig, insbesondere durch kleben, nieten und/oder schrauben, miteinander verbunden sein.

In besonders vorteilhafter Weise kann der Stator derart ausgebildet sein, dass jedes der Elektrobleche einen Anteil zu jedem der Wickelzähne beiträgt. Insbesondere kann vorteilhaft vorgesehen sein, dass der Statorkern aus einem Stapel von, vorzugsweise gleichen, einstückig hergestellten und gegeneinander elektrisch isolierten und/oder miteinander verklebten Elektroblechen besteht. Die Elektrobleche können in herkömmlicher Weise insbesondere durch Ausstanzen (und ggf. weitere Bearbeitungsschritte, wie das Auftragen eines Isoliermittels) hergestellt sein.

Bei einer ganz besonders einfach und kompakt herstellbaren Ausführung weist jedes der Elektrobleche einen ringförmigen Abschnitt auf, an dessen Umfang, insbesondere an dessen Innenumfang, die ersten und zweiten Abschnitte umlaufend abwechselnd angeordnet sind.

Vorzugsweise ist der Statorkern nicht aus segmentartigen Wickelzähnen oder aus segmentartigen Wickelzahngruppen zusammengesetzt. Vielmehr ist es bevorzugt, dass der Statorkern als einstückiger Stapel von, insbesondere gleichen, Elektroblechen hergestellt ist, der nicht in einzelne Segmente von Wickelzähnen oder Gruppen von Wickelzähnen zerlegbar ist, ohne die Elektrobleche zu zerstören.

Vorzugsweise sind die ersten Wickelzähne und die zweiten Wickelzähne im Hinblick auf eine kompakte Bauweise axial nicht voneinander beabstandet und auch nicht axial zueinander versetzt angeordnet. Vielmehr ist es bevorzugt, dass die ersten Wickelzähne und die zweiten Wickelzähne axial gleich angeordnet sind. Alternativ oder zusätzlich kann vorteilhaft vorgesehen sein, dass die ersten Wickelzähne und die zweiten Wickelzähne gleich, insbesondere zumindest axial gleich groß, ausgebildet sind.

Vorzugsweise ist jede der ersten Statorspulen jeweils ausschließlich auf einen einzigen ersten Wickelzahn gewickelt. Alternativ oder zusätzlich kann vorteilhaft vorgesehen sein, dass jede der zweiten Statorspulen jeweils ausschließlich auf einen einzigen zweiten Wickelzahn gewickelt ist. Es hat sich gezeigt, dass das erfindungsgemäße Elektromotorsystem besonders gut funktioniert, wenn auf einen Wickelzahn nur eine einzige Statorspule entweder des ersten Elektromotors oder des zweiten Elektromotors (ggf. des dritten, vierten usw. Elektromotors) gewickelt ist. Die Statorspulen können in ganz besonders vorteilhafter Weise mittels eines Nadelwicklers gewickelt sein. Insbesondere ist es auch möglich, dass ein Wickelzahn mehrere erste oder mehrere zweite Statorspulen trägt. Insbesondere ist es möglich, dass gleichzeitig mittels desselben Nadelwicklers mehrere Wickeldrähte gewickelt werden.

Bei einer ganz besonders effizient arbeitenden Ausführung trägt jeder erste Wickelzahn ausschließlich eine einzige der ersten Statorspulen. Alternativ oder zusätzlich kann vorteilhaft vorgesehen sein, dass jeder zweite Wickelzahn ausschließlich eine einzige der zweiten Statorspulen trägt. Diese Bauweise trägt erheblich dazu bei, dass die Elektromotore, insbesondere gleichzeitig, betreibbar sind, ohne sich gegenseitig zu stören.

Die ersten und zweiten (und ggf. dritten, vierten, usw.) Statorspulen können gleich ausgebildet sein. Insbesondere können auf diese Weise der erste Elektromotor und der zweite Elektromotor gleich ausgebildet werden. Eine solche Ausführung hat insbesondere den ganz besonderen Vorteil, dass in einfacher Weise der zweite Elektromotor (oder ggf. auch ein dritter, vierte ...) Elektromotor als Ersatzmotor unter denselben Betriebs- und Ansteuerbedingungen in dem Fall verwendet werden kann, dass der erste Elektromotor ausfällt.

Insbesondere ermöglicht ein solches Elektromotorsystem beispielsweise auch, ein anzutreibendes System aus dem Stillstand unter gleichzeitiger Verwendung des ersten und des zweiten (und ggf. dritten ...) Elektromotors anzufahren, wobei nach dem Anfahren (wenigstens) einer der Elektromotore abgeschaltet wird, um das System dann effizient nur mit einem der Elektromotore (bzw. mit einer geringeren Anzahl von Elektromotoren als beim Anfahren) weiter zu betreiben. Allerdings ist dies auch möglich, wenn sich die ersten Statorspulen von den zweiten Statorspulen hinsichtlich wenigstens einer Eigenschaft voneinander unterscheiden.

Bei einer ganz besonders vielseitig einsetzbaren Ausführung unterscheiden sich die ersten Statorspulen von den zweiten Statorspulen hinsichtlich wenigstens einer Eigenschaft. Beispielsweise können sich die ersten Statorspulen von den zweiten Statorspulen hinsichtlich wenigstens einer der folgenden Eigenschaften voneinander unterscheiden: Windungszahl, Wickeldrahtdurchmesser, Wickeldrahtquerschnitt, Wickeldrahtmaterial, Wickelart, Betriebsspannung, Betriebsstromstärke. Auf diese Weise kann vorteilhaft erreicht werden, dass der erste Elektromotor andere Eigenschaften, beispielsweise hinsichtlich des maximalen Drehmoments und/oder der maximalen Drehzahl und/oder des Anlaufverhaltens aufweist, als der zweite (und/oder dritte, vierte ...) Elektromotor.

Ein solches Elektromotorsystem ermöglicht es beispielsweise, ein anzutreibendes System aus dem Stillstand mit dem ersten Elektromotor, der zum Bereitstellen eines besonders hohen Drehmoments ausgelegt ist, anzufahren, während der zweite Elektromotor abgeschaltet ist, um anschließend den ersten Elektromotor abzuschalten und das angefahrene System mit dem zweiten Elektromotor, der zum Bereitstellen einer hohen Dauerdrehzahl ausgelegt ist, weiter zu betreiben. Das Umschalten von dem ersten Elektromotor auf den zweiten Elektromotor kann beispielsweise erfolgen, wenn wenigstens eine Kenngröße, beispielsweise eine Drehzahl oder ein Drehmoment, des Elektromotorsystems oder des von dem Elektromotorsystem angetriebenen Systems einen zuvor festgelegten Wert erreicht. Insbesondere kann wenigstens ein Sensor zum Messen der Kenngröße vorhanden sein.

Beispielsweise kann ein geparktes Fahrzeug, das zum Erreichen eines Vortriebs mit wenigstens einem solchen erfindungsgemäßen Elektromotorsystem ausgerüstet ist, mittels eines ersten Elektromotors des Elektromotorsystems, der zum Bereitstellen eines besonders hohen Drehmoments ausgelegt ist, effektiv aus dem Stand in Bewegung versetzt werden, wobei ein Umschalten auf den zweiten Elektromotor, der zum Bereitstellen einer hohen Dauerdrehzahl ausgelegt ist, erfolgt, sobald eine vorbestimmte Kenngröße, beispielsweise eine vorbestimmte oder einstellbare Fahrzeuggeschwindigkeit und/oder eine bestimmte Drehzahl, erreicht wird.

Bei einer ganz besonders vielseitig einsetzbaren Ausführung ist der erste Elektromotor für eine erste Betriebsspannung ausgelegt, während der zweite Elektromotor für eine zweite Betriebsspannung ausgelegt ist, die von der ersten Betriebsspannung verschieden ist. Beispielsweise kann der erste Elektromotor für eine erste Betriebsspannung von 12 Volt ausgelegt sein, während der zweite Elektromotor für eine zweite Betriebsspannung von 48 Volt ausgelegt ist.

Bei einer ganz besonders vorteilhaften Ausführung, die insbesondere im Bereich der Elektrofahrzeuge verwendet werden kann, ist der erste Elektromotor für eine erste Betriebsspannung ausgelegt, die über 350 Volt, insbesondere 400 Volt oder 800 Volt, beträgt. Der zweite Elektromotor ist für eine zweite Betriebsspannung ausgelegt, die ebenfalls über 350 Volt, insbesondere 400 Volt oder 800 Volt, beträgt. Insbesondere kann die zweite Betriebsspannung genauso hoch sein, wie die erste Betriebsspannung oder sich von der ersten Betriebsspannung unterscheiden. Gleiches gilt analog auch für die Betriebsstromstärken. Bei einer besonderen Ausführung sind die ersten Statorspulen dazu ausgebildet, jeweils bei einer ersten Betriebsspannung und bei einer ersten Betriebsstromstärke betrieben zu werden. Analog sind die zweiten Statorspulen dazu ausgebildet, jeweils bei einer zweiten Betriebsspannung und bei einer zweiten Betriebsstromstärke betrieben zu werden.

Es ist auch möglich, dass der erste Elektromotor für eine erste Betriebsspannung ausgelegt, die über 350 Volt, insbesondere 400 Volt oder 800 Volt, beträgt, während der zweite Elektromotor ist für eine zweite Betriebsspannung ausgelegt ist, die unter 100 Volt, insbesondere 48 Volt oder 12 Volt oder ein Vielfaches von 12 Volt, beträgt.

Die Betriebsspannung kann insbesondere eine Gleichspannung sein. Bei einer besonderen Ausführung ist die Betriebsspannung eine Zwischenkreisspannung, die in einem Zwischenkreis anliegt, wobei dem Zwischenkreis ein Ausgangsstromrichter, insbesondere ein Frequenzumrichter, nachgeschaltet ist, an den die Statorspulen angeschlossen sind. Dem Zwischenkreis kann ein Eingangsstromrichter vorgeschaltet sein, der die Zwischenkreisspannung (beispielsweise durch Gleichrichten einer Wechselspannung, insbesondere einer netzgebundenen Wechselspannung) bereitstellt. Alternativ kann die Zwischenkreisspannung von einem elektrischen Energiespeicher, insbesondere einer Batterie oder einer wiederaufladbaren Batterie, bereitgestellt sein.

Bei einer vorteilhaften Ausführung sind die ersten Statorspulen in eine erste elektrische Schaltung integriert, während die zweiten Statorspulen in eine von der ersten elektrischen Schaltung separate und/oder unabhängige zweite elektrische Schaltung integriert sind. Die erste elektrische Schaltung kann beispielsweise eine Sternschaltung oder eine Dreiecksschaltung sein. Alternativ oder zusätzlich kann vorteilhaft vorgesehen sein, dass die zweite elektrische Schaltung eine Sternschaltung oder eine Dreiecksschaltung ist. Insbesondere ist es nicht zwingend erforderlich aber vorteilhaft möglich, dass die elektrischen Schaltungen unterschiedlicher Elektromotore von demselben Schaltungstypus sind. Im Falle von Sternschaltungen können die erste Schaltung und die zweite Schaltung vorteilhaft einen gemeinsamen Sternpunkt aufweisen. Allerdings sind auch getrennte Sternpunkte möglich.

Vorzugsweise sind die erste elektrische Schaltung und die zweite elektrische Schaltung derart ausgebildet, dass sie unabhängig voneinander betrieben werden können. Dies hat den ganz besonderen Vorteil, dass ein Ausfall eines der Elektromotore und/oder ein Ausfall der dem Elektromotor zugeordneten elektrischen Schaltung keinen Einfluss auf die Funktionsfähigkeit des (bzw. der) übrigen Elektromotore haben. Allerdings kann insbesondere für einen Simultanbetrieb des ersten und des zweiten Elektromotors vorgesehen sein, dass (beispielsweise durch eine Kopplung der ersten und zweiten Schaltung) die Ansteuerung des ersten Elektromotors synchron oder zeitversetzt synchron zur Ansteuerung des zweiten Elektromotors erfolgt. Insbesondere kann vorteilhaft vorgesehen sein, dass die Ansteuersignale zumindest hinsichtlich der Frequenz und der Phasenlagen für beide (und ggf. weitere) Elektromotore (abgesehen von einem Zeitversatz) gleich sind. Auf diese Weise ist ganz besonders gut gewährleistet, dass sich die Elektromotore bei einem gleichzeitigen Betrieb oder beim Umschalten von einem Elektromotor auf den anderen Elektromotor bei einem sequentiellen Betrieb nicht gegenseitig nachteilig beeinflussen.

Vorzugsweise ist der Rotor durch ausschließliches Bestromen der ersten Statorspulen zur Rotation antreibbar. Vorzugsweise ist der Rotor außerdem durch ausschließliches Bestromen der zweiten Statorspulen zur Rotation antreibbar.

Alternativ oder zusätzlich kann vorteilhaft vorgesehen sein, dass der Rotor durch gleichzeitiges Bestromen der ersten Statorspulen und der zweiten Statorspulen zur Rotation antreibbar ist. Ein simultanes Bestromen der ersten Statorspulen und der zweiten Statorspulen, insbesondere aller Statorspulen (falls dritte, vierte ... Statorspulen vorhanden sind), hat den Vorteil, dass das Elektromotorsystem eine höhere Ausgangsleistung aufweist. Insbesondere kann ein Antriebssystem, das ein solches Elektromotorsystem beinhaltet, vorteilhaft eine Steuerungsvorrichtung aufweisen, die dazu ausgebildet ist, gleichzeitig sowohl die ersten Statorspulen als auch die zweiten Statorspulen (und vorzugsweise alle weiteren Statorspulen, falls dritte, vierte ... Statorspulen vorhanden sind) zu bestromen, um den Rotor zur Rotation anzutreiben.

Der erste Elektromotor kann vorteilhaft als bürstenloser Gleichstrommotor oder als permanent erregter Synchronmotor ausgebildet sein. Auch der zweite Elektromotor kann vorteilhaft als bürstenloser Gleichstrommotor oder als permanent erregter Synchronmotor ausgebildet sein.

Bei einer besonderen Ausführung sind der erste Elektromotor und der zweite Elektromotor als Mehrphasenmotor, insbesondere als Dreiphasenmotor, ausgebildet. Hierbei kann zur Erzielung einer hohen Effizienz im gemeinsamen Betrieb vorteilhaft vorgesehen sein, dass jede der ersten Statorspulen einer der Phasen zugordnet ist und dass jede der zweiten Statorspulen einer der Phasen zugordnet ist, wobei die Zuordnung der Phasen der ersten Statorspulen zu der Zuordnung der Phasen der zweiten Statorspulen drehversetzt ist.

Bei einer besonderen Ausführung des Elektromotorsystems ist zwischen zwei ersten Statorspulen jeweils eine zweite Statorspule angeordnet. Die ersten Statorspulen können jeweils mittig zwischen den zweiten Statorspulen angeordnet sein. Es ist vorteilhaft jedoch auch möglich, dass die Abstände der ersten Statorspulen zu den unmittelbar benachbarten zweiten Statorspulen jeweils verschieden sind.

Die Gesamtanzahl der ersten Statorspulen kann von der Gesamtanzahl der zweiten Statorspulen verschieden sein. Auf diese Weise ist es ermöglicht, Elektromotore mit ganz unterschiedlichen Eigenschaften zu realisieren. Alternativ oder zusätzlich kann vorteilhaft vorgesehen sein, dass die ersten Wickelzähne eine andere Größe aufweisen, als die zweiten Wickelzähne. Auch auf diese Weise ist es ermöglicht, Elektromotore mit ganz unterschiedlichen Eigenschaften zu realisieren. Allerdings ist es nicht ausgeschlossen, dass die Gesamtanzahl der ersten Statorspulen und der zweiten Statorspulen gleich ist und/oder dass die ersten Wickelzähne und die zweiten Wickelzähne gleich ausgebildet sind.

Ganz besonders vorteilhaft ist ein Antriebssystem, das ein erfindungsgemäßes Elektromotorsystem und eine elektronische Steuerungsvorrichtung aufweist. Insbesondere kann die Steuerungsvorrichtung eine erste Antriebselektronik, die die Bestromung der ersten Statorspulen steuert, und/oder eine zweite Antriebselektronik, die die Bestromung der zweiten Statorspulen steuert, aufweisen. Die Steuerungsvorrichtung kann mehrere, insbesondere redundante, Antriebselektroniken beinhalten, von denen jede dazu ausgebildet ist, die ersten und zweiten (und dritten, vierten ...) Statorspulen zu bestromen. Die Steuerungsvorrichtung kann insbesondere dazu ausgebildet sein, wenigstens eine Betriebsgröße des ersten und/oder zweiten (oder dritten, vierten ...) Elektromotors, insbesondere die Drehzahl und/oder das Drehmoment und/oder eine elektrische Stromstärke und/oder eine elektrische Betriebsspannung und/oder eine Frequenz, zu steuern oder zu regeln.

Insbesondere für ein simultanes Bestromen der ersten Statorspulen und der zweiten Statorspulen (insbesondere aller Statorspulen) kann vorteilhaft vorgesehen sein, dass die Antriebselektroniken miteinander synchronisierbar sind. Hierzu kann die Antriebselektronik eine Synchronisierungsschaltung beinhalten. Auch bei einer solchen Ausführung kann jedoch vorteilhaft vorgesehen sein, dass das Elektromotorsystem unter Verwendung nur eines Elektromotors weiter betrieben werden kann, wenn bei dem anderen Elektromotor und/oder dessen Antriebselektronik ein Fehler auftritt.

Insbesondere kann vorteilhaft vorgesehen sein, dass die Steuerungsvorrichtung den jeweiligen Elektromotor (oder alle Elektromotore des Elektromotorsystems) mittels einer Pulsbreitenmodulation steuert oder regelt. Eine solche Ausführung erlaubt eine präzise Steuerung bzw. Regelung der Drehzahl und/oder des Drehmomentes. Bei einer Steuerung bzw. Regelung eines Elektromotors mittels Pulsbreitenmodulation sind insbesondere das Tastverhältnis und die Trägerfrequenz von besonderer Relevanz. Insbesondere kann vorteilhaft vorgesehen sein, dass die Steuerungsvorrichtung den jeweiligen Elektromotor mittels Pulsbreitenmodulation mit einer Trägerfrequenz im Bereich von 4 kHz bis 150 kHz, insbesondere im Bereich von 20 kHz bis 100 kHz oder 20 kHz bis 70 kHz, steuert oder regelt. Diese Trägerfrequenzen haben insbesondere den ganz besonderen Vorteil, dass ein hoher Wirkungsgrad und/oder hohe Drehzahlen realisiert werden können. Darüber hinaus besteht ein besonderer Vorteil dieser vergleichsweise hohen Trägerfrequenzen darin, dass kompakte Abmessungen möglich sind, ohne dass es bei hohen Stromstärken zu einer übermäßigen Erwärmung kommt. In ganz besonders vorteilhafter Weise sind durch die genannten Trägerfrequenzen außerdem laute Motorengeräusche vermieden oder zumindest in einen für einen Menschen nicht hörbaren Frequenzbereich verschoben.

Bei einer besonders zuverlässigen Ausführung des Antriebssystems weisen die erste Antriebselektronik und die zweite Antriebselektronik unterschiedliche Regelungsalgorithmen auf. Auf diese Weise wird das Risiko systematischer Fehler des Antriebssystems reduziert. Insbesondere kann vorteilhaft vorgesehen sein, dass die Steuerungsvorrichtung die Steuersignale der Antriebselektroniken, insbesondere wenn beide Elektromotore gleichzeitig betrieben werden, auf Plausibilität miteinander vergleicht.

Bei einer besonders vorteilhaften Ausführung des Antriebssystems weist der erste Elektromotor einen ersten Rotationslagesensor auf, der Messsignale an die erste Antriebselektronik übermittelt, während der zweite Elektromotor einen zweiten (von dem ersten Rotationslagesensor verschiedenen und/oder unterschiedlichen) Rotationslagesensor aufweist, der Messsignale an die zweite Antriebselektronik übermittelt. Die Rotationslagesensoren können gleich ausgebildet sein. Es ist jedoch alternativ insbesondere auch möglich, dass sich die Rotationslagesensoren durch ihr Messprinzip voneinander unterscheiden, was das Antriebssystem besonders unanfällig gegen systematische Fehler macht. Insbesondere kann vorteilhaft vorgesehen sein, dass die Steuerungsvorrichtung die Messsignale der Rotationslagesensoren, insbesondere wenn beide Elektromotore gleichzeitig betrieben werden, auf Plausibilität miteinander vergleicht. Insbesondere, wenn beide Rotationslagesensoren die Rotationslage desselben, vorzugsweise einzigen, Rotors messen, können im Falle einer Diskrepanz, insbesondere automatisch, weitere Schritte, wie beispielsweise die Berechnung und Verwendung eines Mittelwertes oder eine Motorabschaltung oder die Ausgabe eines Warnsignales, ausgelöst werden.

Alternativ ist es auch möglich, dass der erste Elektromotor und der zweite Elektromotor einen gemeinsamen Rotationslagesensor aufweisen, der Messsignale an die erste Antriebselektronik und an die zweite Antriebselektronik übermittelt. Eine solche Ausführung kommt mit weniger Bauraum aus.

Das erfindungsgemäße Elektromotorsystem und das erfindungsgemäße Antriebssystem können ganz besonders vorteilhaft in Systemen zur Anwendung kommen, in denen ein vielseitiger und zuverlässiger Antrieb einer Komponente erforderlich ist. Insbesondere ist eine Verwendung in sicherheitsrelevanten Systemen, insbesondere bei sicherheitsrelevanten Fahrzeugsystemen, wie beispielsweise bei Lenkungen, aktiven Fahrwerken oder Robotern, besonders vorteilhaft.

Insoweit ist eine Lenkung, insbesondere eine PKW-Lenkung oder eine LKW-Lenkung, besonders vorteilhaft, die wenigstens ein erfindungsgemäßes Elektromotorsystem oder ein erfindungsgemäßes Antriebssystem aufweist. Bei der Lenkung kann es sich beispielsweise um eine Servolenkung und/oder eine Überlagerungslenkung und/oder eine Steer-by-Wire-Lenkung handeln. Die Verwendung eines erfindungsgemäßen Elektromotorsystems oder eines erfindungsgemäßen Antriebssystems in einer Lenkung ist besonders vorteilhaft, weil bei einem Fahrzeug ein sehr hohes Sicherheitsniveau erforderlich ist, um ein plötzliches Totalversagen der Lenkung ausschließen zu können. Außerdem kann für unterschiedliche Fahrsituationen angepasst ein Betrieb mit dem ersten Elektromotor oder ein Betrieb mit dem zweiten Elektromotor oder mit beiden Elektromotoren ausgewählt werden. Hierbei ist es im Hinblick auf eine große Flexibilität besonders vorteilhaft, wenn der erste Elektromotor und der zweite Elektromotor unterschiedlich ausgebildet sind.

Ganz besonders vorteilhaft ist auch ein Fahrwerk, das wenigstens ein erfindungsgemäßes Elektromotorsystem oder ein erfindungsgemäßes Antriebssystem aufweist. Bei dem Fahrwerk kann es sich insbesondere um ein aktives Fahrwerk für ein Kraftfahrzeug handeln. Das aktive Fahrwerk kann insbesondere zur Nickstabilisation und/oder zur Wankstabilisation und/oder zur Höhenverstellung einer Fahrzeugkarosserie relativ zu den Rädern ausgebildet sein. Die Verwendung eines erfindungsgemäßen Elektromotorsystems oder eines erfindungsgemäßen Antriebssystems in einem aktiven Fahrwerk ist besonders vorteilhaft, weil bei einem Fahrzeug ein sehr hohes Sicherheitsniveau erforderlich ist, um ein plötzliches und gefährliches Totalversagen während der Fahrt ausschließen zu können. Außerdem kann für unterschiedliche Fahrsituationen angepasst ein Betrieb mit dem ersten Elektromotor oder ein Betrieb mit dem zweiten Elektromotor oder mit beiden Elektromotoren ausgewählt werden. Hierbei ist es im Hinblick auf eine große Flexibilität besonders Vorteilhaft, wenn der erste Elektromotor und der zweite Elektromotor unterschiedlich ausgebildet sind.

Ganz besonders vorteilhaft ist auch ein Roboter, insbesondere Industrieroboter, der wenigstens ein erfindungsgemäßes Elektromotorsystem oder ein erfindungsgemäßes Antriebssystem beinhaltet. Insbesondere können das erfindungsgemäße Elektromotorsystem oder das erfindungsgemäße Antriebssystem vorteilhaft Bestandteil eines Robotergelenks sein. Das Robotergelenk kann insbesondere in der Weise ausgebildet sein, dass es zwei Träger eines Roboterarms beweglich, insbesondere drehbeweglich oder schwenkbeweglich, miteinander verbindet, wobei eine Bewegung der Träger relativ zueinander mittels des erfindungsgemäßen Elektromotorsystems oder des erfindungsgemäßen Antriebssystems gesteuert oder geregelt werden kann. Die Verwendung eines erfindungsgemäßen Elektromotorsystems oder eines erfindungsgemäßen Antriebssystems in einem Roboter bzw. Robotergelenk ist besonders vorteilhaft, weil bei einem Roboter ein sehr hohes Sicherheitsniveau erforderlich ist, um ein plötzliches und gefährliches Totalversagen, insbesondere während der Ausführung einer Bewegung, zuverlässig ausschließen zu können. Außerdem kann an unterschiedliche Anwendungssituationen des Roboters angepasst wahlweise ein Betrieb mit dem ersten Elektromotor oder ein Betrieb mit dem zweiten Elektromotor oder mit beiden Elektromotoren ausgewählt werden. Hierbei ist es im Hinblick auf eine große Flexibilität besonders Vorteilhaft, wenn der erste Elektromotor und der zweite Elektromotor unterschiedlich ausgebildet sind.

Ganz besonders vorteilhaft ist auch ein Flugzeug, insbesondere ein Fly-by-Wire-Flugzeug, das wenigstens ein erfindungsgemäßes Elektromotorsystem oder ein erfindungsgemäßes Antriebssystem beinhaltet. Das erfindungsgemäße Elektromotorsystem oder das erfindungsgemäße Antriebssystem kann insbesondere zur Steuerung oder Regelung der Stellung eines Ruders oder einer Klappe zum Einsatz kommen. Die Verwendung eines erfindungsgemäßen Elektromotors oder eines erfindungsgemäßen Antriebssystems in einem Flugzeug ist besonders vorteilhaft, weil bei einem Flugzeug ein sehr hohes Sicherheitsniveau erforderlich ist, um ein plötzliches und gefährliches Totalversagen, insbesondere während des Fluges, zuverlässig ausschließen zu können. Außerdem kann an unterschiedliche Flugsituationen angepasst entweder ein Betrieb mit dem ersten Elektromotor oder ein Betrieb mit dem zweiten Elektromotor oder ein Betrieb mit beiden Elektromotoren ausgewählt werden. Hierbei ist es im Hinblick auf eine große Flexibilität besonders Vorteilhaft, wenn der erste Elektromotor und der zweite Elektromotor unterschiedlich ausgebildet sind.

Ganz besonders vorteilhaft ist auch ein Fahrzeug, insbesondere Baumaschinenfahrzeug, das wenigstens ein erfindungsgemäßes Elektromotorsystem oder ein erfindungsgemäßes Antriebssystem aufweist. Die Verwendung eines erfindungsgemäßen Elektromotorsystems oder eines erfindungsgemäßen Antriebssystems in einem Fahrzeug ist besonders vorteilhaft, weil bei einem Fahrzeug ein sehr hohes Sicherheitsniveau erforderlich ist, um ein plötzliches und gefährliches Totalversagen während der Fahrt ausschließen zu können. Außerdem kann für unterschiedliche Fahrsituationen angepasst ein Betrieb mit dem ersten Elektromotor oder ein Betrieb mit dem zweiten Elektromotor oder ein Betrieb mit beiden Elektromotoren ausgewählt werden. Hierbei ist es im Hinblick auf eine große Flexibilität besonders Vorteilhaft, wenn der erste Elektromotor und der zweite Elektromotor unterschiedlich ausgebildet sind. Das Fahrzeug kann vorteilhaft mehrere erfindungsgemäße Elektromotorsysteme aufweisen, wobei die Elektromotorsysteme unterschiedliche Antriebsräder und/oder unterschiedliche Antriebsachsen des Fahrzeuges antreiben.

Ganz besonders vorteilhaft ist auch eine Baumaschine, die wenigstens ein erfindungsgemäßes Elektromotorsystem oder ein erfindungsgemäßes Antriebssystem aufweist. Die Verwendung eines erfindungsgemäßen Elektromotorsystems oder eines erfindungsgemäßen Antriebssystems in einer Baumaschine ist besonders vorteilhaft, weil bei Baumaschinen ein sehr hohes Sicherheitsniveau erforderlich ist, um ein plötzliches und gefährliches Totalversagen während des Betriebs ausschließen zu können. Außerdem kann für unterschiedliche Anwendungssituationen angepasst ein Betrieb mit entweder dem ersten Elektromotor oder ein Betrieb mit dem zweiten Elektromotor oder ein Betrieb mit beiden Elektromotoren ausgewählt werden. Hierbei ist es im Hinblick auf eine große Flexibilität besonders vorteilhaft, wenn der erste Elektromotor und der zweite Elektromotor unterschiedlich ausgebildet sind.

Das erfindungsgemäße Elektromotorsystem kann vorteilhaft in einem Umkehrbetrieb, bei dem der Rotor von außen relativ zu dem Stator zur Rotation angetrieben wird, als Generatorsystem verwendet werden. Auch hierbei bietet das erfindungsgemäße Elektromotorsystem den Vorteil einer Redundanz und/oder der individuellen Ausnutzbarkeit von unterschiedlichen Eigenschaften des ersten und zweiten Elektromotors und/oder der gleichzeitigen Einsetzbarkeit des ersten und des zweiten Elektromotors.

Von besonderem Vorteil ist ein Gegenstand, insbesondere ein Elektromotorsystem oder ein Antriebssystem, bzw. ein Verfahren, der bzw. das wenigstens einen der nachfolgenden Aspekte aufweist:
1. Elektromotorsystem (1) beinhaltend einen ersten Elektromotor, der erste Statorspulen (2) aufweist, und beinhaltend einen zweiten Elektromotor, der zweite Statorspulen (3) aufweist, dadurch gekennzeichnet, dass der erste Elektromotor und der zweite Elektromotor denselben geblechten Statorkern (12) haben, der mehrere erste Wickelzähne (6), auf die ausschließlich die ersten Statorspulen (2) gewickelt sind, und mehrere zweite Wickelzähne (7), auf die ausschließlich die zweiten Statorspulen (3) gewickelt sind, aufweist.
2. Elektromotorsystem (1) nach Aspekt 1, dadurch gekennzeichnet, dass der Statorkern (12) einen Stapel von Elektroblechen (11) beinhaltet, von denen jedes zumindest erste Abschnitte, die Bestandteil der ersten Wickelzähne (6) sind, und zweite Abschnitte, die Bestandteil der zweiten Wickelzähne (7) sind, aufweist.
3. Elektromotorsystem (1) nach Aspekt 2, dadurch gekennzeichnet, dass jedes der Elektrobleche (11) einen ringförmigen Abschnitt (15) aufweist, an dessen Umfang, insbesondere Innenumfang, die ersten und zweiten Abschnitte umlaufend abwechselnd angeordnet sind.
4. Elektromotorsystem (1) nach einem der Aspekte 1 bis 3, dadurch gekennzeichnet, dass jede der ersten Statorspulen (2) jeweils ausschließlich auf einen einzigen ersten Wickelzahn gewickelt sind und/oder dass jede der zweiten Statorspulen (3) jeweils ausschließlich auf einen einzigen zweiten Wickelzahn gewickelt sind.
5. Elektromotorsystem (1) nach einem der Aspekte 1 bis 4, dadurch gekennzeichnet, dass jeder erste Wickelzahn (6) ausschließlich eine einzige der ersten Statorspulen (2) trägt und/oder dass jeder zweite Wickelzahn (7) ausschließlich eine einzige der zweiten Statorspulen (3) trägt.
6. Elektromotorsystem (1) nach einem der Aspekte 1 bis 5, dadurch gekennzeichnet, dass sich die ersten Statorspulen (2) von den zweiten Statorspulen (3) hinsichtlich wenigstens einer Eigenschaft voneinander unterscheiden.
7. Elektromotorsystem (1) nach einem der Aspekte 1 bis 6, dadurch gekennzeichnet, dass sich die ersten Statorspulen (2) von den zweiten Statorspulen (3) hinsichtlich wenigstens einer der folgenden Eigenschaften voneinander unterscheiden: Windungszahl, Wickeldrahtdurchmesser, Wickeldrahtquerschnitt, Wickeldrahtmaterial, Wickelart, Betriebsspannung, Betriebsstrom.
8. Elektromotorsystem (1) nach einem der Aspekte 1 bis 7, dadurch gekennzeichnet, dass der erste Elektromotor für eine erste Betriebsspannung ausgelegt ist und dass der zweite Elektromotor für eine zweite Betriebsspannung ausgelegt ist, die von der ersten Betriebsspannung verschieden ist.
9. Elektromotorsystem (1) nach einem der Aspekte 1 bis 8, dadurch gekennzeichnet, dass die ersten Statorspulen (2) in eine erste elektrische Schaltung integriert sind und dass die zweiten Statorspulen (3) in eine von der ersten elektrischen Schaltung separate und/oder unabhängige zweite elektrische Schaltung integriert sind.
10. Elektromotorsystem (1) nach Aspekt 9, dadurch gekennzeichnet, dass die erste elektrische Schaltung eine Sternschaltung oder eine Dreiecksschaltung ist und/oder dass die zweite elektrische Schaltung eine Sternschaltung oder eine Dreiecksschaltung ist.
11. Elektromotorsystem (1) nach einem der Aspekte 1 bis 10, dadurch gekennzeichnet, dass der erste Elektromotor und der zweite Elektromotor denselben Rotor (4) aufweisen.
12. Elektromotorsystem (1) nach Aspekt 11, dadurch gekennzeichnet, dass der Rotor in Axialrichtung mindestens genauso lang ist, wie der gesamte Statorkern und/oder die ersten Statorspulen (2) und/oder die zweiten Statorspulen (3) und/oder die ersten Wickelzähne (6) und/oder die zweiten Wickelzähne (7).
13. Elektromotorsystem (1) nach Aspekt 11 oder 12, dadurch gekennzeichnet, dass der Rotor mehrere, insbesondere in Umfangsrichtung symmetrisch und/oder äquidistant angeordnete, Permanentmagnete aufweist.
14. Elektromotorsystem (1) nach Aspekt 13, dadurch gekennzeichnet, dass die ersten Statorspulen (2) im Betrieb des ersten Elektromotors mit sämtlichen Permanentmagneten zusammenwirken und dass die zweiten Statorspulen (3) im Betrieb des zweiten Elektromotors mit sämtlichen Permanentmagneten zusammenwirken.
15. Elektromotorsystem (1) nach einem der Aspekte 1 bis 14, dadurch gekennzeichnet, dass die ersten Statorspulen (2) dazu ausgebildet sind, jeweils bei einer ersten Betriebsspannung und bei einer ersten Betriebsstromstärke betrieben zu werden, und dass die zweiten Statorspulen (3) dazu ausgebildet sind, jeweils bei einer zweiten Betriebsspannung und bei einer zweiten Betriebsstromstärke betrieben zu werden.
16. Elektromotorsystem nach Aspekt 15, dadurch gekennzeichnet, dass die erste Betriebsspannung über 350 Volt, insbesondere 400 Volt oder 800 Volt, beträgt, und/oder dass die zweite Betriebsspannung über 350 Volt, insbesondere 400 Volt oder 800 Volt, beträgt.
17. Elektromotorsystem (1) nach einem der Aspekte 1 bis 16, dadurch gekennzeichnet, dass der Rotor (4) durch ausschließliches Bestromen der ersten Statorspulen (2) zur Rotation antreibbar ist und/oder dass der Rotor (4) durch ausschließliches Bestromen der zweiten Statorspulen (3) zur Rotation antreibbar ist.
18. Elektromotorsystem (1) nach einem der Aspekte 1 bis 17, dadurch gekennzeichnet, dass der Rotor (4) durch gleichzeitiges Bestromen der ersten Statorspulen (2) und der zweiten Statorspulen (3) zur Rotation antreibbar ist.
19. Elektromotorsystem (1) nach einem der Aspekte 1 bis 18, dadurch gekennzeichnet, dass
   a. der erste Elektromotor als bürstenloser Gleichstrommotor oder als permanent erregter Synchronmotor ausgebildet ist, und/oder dass
   b. der zweite Elektromotor als bürstenloser Gleichstrommotor oder als permanent erregter Synchronmotor ausgebildet ist.
20. Elektromotorsystem (1) nach einem der Aspekte 1 bis 19, dadurch gekennzeichnet, dass der erste Elektromotor als Mehrphasenmotor, insbesondere als Dreiphasenmotor, ausgebildet ist und dass der zweite Elektromotor als Mehrphasenmotor, insbesondere als Dreiphasenmotor, ausgebildet ist.
21. Elektromotorsystem (1) nach Aspekt 20, dadurch gekennzeichnet, dass jeder der ersten Statorspulen (2) einer der Phasen zugordnet ist und dass jeder der zweiten Statorspulen (3) einer der Phasen zugordnet ist, wobei die Zuordnung der Phasen der ersten Statorspulen (2) zu der Zuordnung der Phasen der zweiten Statorspulen (3) drehversetzt ist.
22. Elektromotorsystem (1) nach einem der Aspekte 1 bis 21, dadurch gekennzeichnet, dass zwischen zwei ersten Statorspulen (2) jeweils eine zweite Statorspule (3) angeordnet ist.
23. Elektromotorsystem (1) nach Aspekt 22, dadurch gekennzeichnet, dass die Abstände der ersten Statorspulen (2) zu den unmittelbar benachbarten zweiten Statorspulen (3) jeweils verschieden sind.
24. Elektromotorsystem (1) nach einem der Aspekte 1 bis 23, dadurch gekennzeichnet, dass die Gesamtanzahl der ersten Statorspulen (2) von der Gesamtanzahl zweiten Statorspulen (3) verschieden ist.
25. Elektromotorsystem (1) nach einem der Aspekte 1 bis 24, dadurch gekennzeichnet, dass die ersten Wickelzähne (6) zu den zweiten Wickelzähen (7), insbesondere hinsichtlich der Größe, ungleich ausgebildet sind.
26. Antriebssystem das ein Elektromotorsystem (1) nach einem der Aspekte 1 bis 25 und eine elektronische Steuerungsvorrichtung (8) aufweist.
27. Antriebssystem nach Aspekt 26, dadurch gekennzeichnet, dass die Steuerungsvorrichtung (8) eine erste Antriebselektronik (9) aufweist, die die Bestromung der ersten Statorspulen (2) steuert, und/oder dass die Steuerungsvorrichtung (8) eine zweite Antriebselektronik (10) aufweist, die die Bestromung der zweiten Statorspulen (3) steuert.
28. Antriebssystem nach Aspekt 27, dadurch gekennzeichnet, dass die erste Antriebselektronik (9) und die zweite Antriebselektronik (10) miteinander synchronisiert sind oder eine Synchronisierung einschaltbar ist.
29. Antriebssystem nach Aspekt 27 oder 28, dadurch gekennzeichnet, dass
   a. der erste Elektromotor einen ersten Rotationslagesensor aufweist, der Messsignale an die erste Antriebselektronik (9) übermittelt, und dass der zweite Elektromotor einen zweiten Rotationslagesensor aufweist, der Messsignale an die zweite Antriebselektronik (10) übermittelt, oder dass
   b. erste Elektromotor und der zweite Elektromotor einen gemeinsamen Rotationslagesensor aufweisen, der Messsignale an die erste Antriebselektronik (9) und an die zweite Antriebselektronik (10) übermittelt.
30. Antriebssystem nach einem der Aspekte 22 bis 25, dadurch gekennzeichnet, dass die erste Antriebselektronik (9) und die zweite Antriebselektronik (10) unterschiedliche Regelungsalgorithmen aufweisen.
31. Lenkung, insbesondere PKW-Lenkung oder LKW-Lenkung, die wenigstens ein Elektromotorsystem (1) nach einem der Aspekte 1 bis 25 oder ein Antriebssystem nach einem der Aspekte 26 bis 30 aufweist.
32. Lenkung nach Aspekt 31, dadurch gekennzeichnet, dass die Lenkung eine Servolenkung und/oder eine Überlagerungslenkung und/oder eine Steer-by-Wire-Lenkung ist.
33. Fahrwerk, insbesondere aktives Fahrwerk für ein Kraftfahrzeug, das wenigstens ein Elektromotorsystem (1) nach einem der Aspekte 1 bis 21 oder ein Antriebssystem nach einem der Aspekte 26 bis 30 aufweist.
34. Roboter, insbesondere Industrieroboter, beinhaltend wenigstens ein Elektromotorsystem (1) nach einem der Aspekte 1 bis 25 oder ein Antriebssystem nach einem der Aspekte 26 bis 30.
35. Robotergelenk, das wenigstens ein Elektromotorsystem (1) nach einem der Aspekte 1 bis 25 oder ein Antriebssystem nach einem der Aspekte 26 bis 30 aufweist.
36. Flugzeug, insbesondere Fly-by-Wire-Flugzeug, das wenigstens ein Elektromotorsystem (1) nach einem der Aspekte 1 bis 25 oder ein Antriebssystem nach einem der Aspekte 26 bis 30 aufweist.
37. Fahrzeug, das wenigstens ein Elektromotorsystem (1) nach einem der Aspekte 1 bis 25 oder ein Antriebssystem nach einem der Aspekte 26 bis 30 aufweist.
38. Fahrzeug nach Aspekt 25, dadurch gekennzeichnet, dass das Fahrzeug mehrere Elektromotorsysteme (1) nach einem der Aspekte 1 bis 25 aufweist, wobei die Elektromotorsysteme (1) unterschiedliche Antriebsräder und/oder unterschiedliche Antriebsachsen des Fahrzeuges antreiben.
39. Baumaschine, die wenigstens ein Elektromotorsystem (1) nach einem der Aspekte 1 bis 25 oder ein Antriebssystem nach einem der Aspekte 26 bis 30 aufweist.
40. Verwendung eines Elektromotorsystems (1) nach einem der Aspekte 1 bis 25 als Generatorsystem.

In den Zeichnungen ist der Erfindungsgegenstand beispielhaft und schematisch dargestellt und wird anhand der Figuren nachfolgend beschrieben, wobei gleiche oder gleich wirkende Elemente auch in unterschiedlichen Ausführungsbeispielen zumeist mit denselben Bezugszeichen versehen sind. Dabei zeigen:
- Fig. 1: ein Ausführungsbeispiel eines erfindungsgemäßen Elektromotorsystems,
- Fig. 2: ein erstes Ausführungsbeispiel eines erfindungsgemäßen Antriebssystems,
- Fig. 3: ein zweites Ausführungsbeispiel eines erfindungsgemäßen Antriebssystems,
- Fig. 4: ein Ausführungsbeispiel eines Elektroblechs für einen geblechten Statorkern eines erfindungsgemäßen Elektromotorsystems in der Draufsicht,
- Fig. 5: ein Ausführungsbeispiel eines geblechten Statorkerns eines erfindungsgemäßen Elektromotorsystems in einer Seitenansicht,
- Fig. 6: ein drittes Ausführungsbeispiel eines erfindungsgemäßen Antriebssystems,
- Fig. 7: ein zweites Ausführungsbeispiel eines Elektroblechs für einen geblechten Statorkern eines erfindungsgemäßen Elektromotorsystems in der Draufsicht, und
- Fig. 8: ein drittes Ausführungsbeispiel eines Elektroblechs für einen geblechten Statorkern eines erfindungsgemäßen Elektromotorsystems in der Draufsicht.

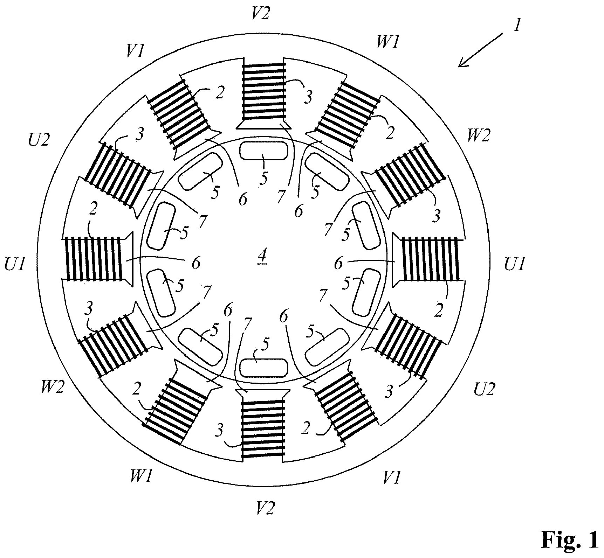

Fig. 1 zeigt ein Ausführungsbeispiel eines erfindungsgemäßen Elektromotorsystems 1. Das Elektromotorsystem 1 beinhaltet einen ersten Elektromotor, der erste Statorspulen 2 aufweist, und beinhaltet außerdem einen zweiten Elektromotor, der zweite Statorspulen 3 aufweist. Der erste Elektromotor und der zweite Elektromotor weisen denselben permanentmagnetischen Rotor 4 auf, der mehrere Permanentmagnete 5 aufweist. Der erste Elektromotor und der zweite Elektromotor weisen außerdem denselben geblechten Statorkern auf, der mehrere erste Wickelzähne 6, auf die ausschließlich die ersten Statorspulen 2 gewickelt sind, und mehrere zweite Wickelzähne 7, auf die ausschließlich die zweiten Statorspulen 3 gewickelt sind, aufweist.

Der Statorkern weist bei diesem Ausführungsbeispiel sechs erste Wickelzähne 6 und sechs zweite Wickelzähne 7 auf.

Der erste Elektromotor ist als Dreiphasenmotor ausgebildet, wobei jeweils zwei um 180 Grad gegenüberliegenden ersten Statorspulen 2 (paarweise) dieselbe Phase U1, V1 und W1 zugeordnet ist. Die ersten Statorspulen 2 derselben Phase U1, V1, W1 können in Reihe oder parallel geschaltet sein. Der zweite Elektromotor ist ebenfalls als Dreiphasenmotor ausgebildet, wobei jeweils zwei um 180 Grad gegenüberliegenden zweiten Statorspulen 3 dieselbe Phase U2, V2 und W2 zugeordnet sind. Die zweiten Statorspulen 3 derselben Phase können in Reihe oder parallel geschaltet sein. Die Zuordnung der Phasen der ersten Statorspulen 2 ist zu der Zuordnung der Phasen der zweiten Statorspulen 3 im Uhrzeigersinn um 30 Grad (360 Grad dividiert durch 12, nämlich die Anzahl der ersten und zweiten Wickelzähne) drehversetzt. Die erforderlichen elektrischen Verbindungen der Statorspulen 2, 3 können vorteilhaft durch direktes Verbinden der jeweiligen Wickeldrähte, insbesondere durch direktes Verbinden der jeweiligen Wickeldrähte, insbesondere in einem Steckverbinder zum Anschließen an eine Steuerungsvorrichtung, erreicht werden. Alternativ ist auch die Verwendung von Stromschienen möglich, wobei insbesondere vorteilhaft vorgesehen sein kann, dass die Stromschienen des ersten Elektromotors und die Stromschienen des zweiten Elektromotors räumlich getrennt auf unterschiedlichen axialen Seiten des Statorkerns angeordnet sind.

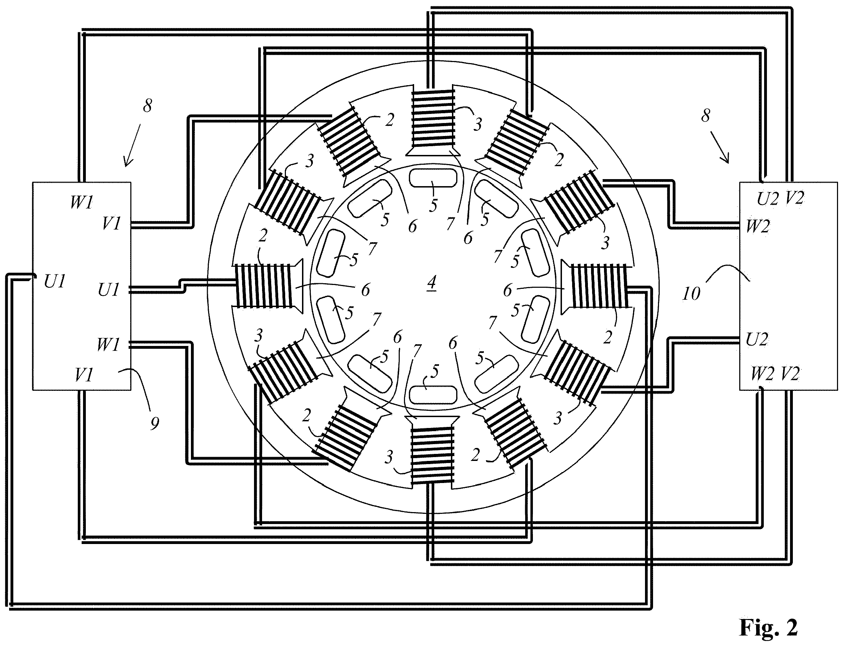

Fig. 2 zeigt ein erstes Ausführungsbeispiel eines erfindungsgemäßen Antriebssystems, das ein erfindungsgemäßes Elektromotorsystem 1 und eine elektronische Steuerungsvorrichtung 8 aufweist. Die Steuerungsvorrichtung 8 weist eine erste Antriebselektronik 9 auf, die die Bestromung der ersten Statorspulen 2 steuert und die an die ersten Statorspulen 2 angeschlossen ist. Die Steuerungsvorrichtung 8 weist außerdem eine zweite Antriebselektronik 10 auf, die die Bestromung der zweiten Statorspulen 3 steuert und die an die zweiten Statorspulen 3 angeschlossen sind.

Die ersten Statorspulen 2 derselben Phase U1, V1, W1 und die zweiten Statorspulen 3 derselben Phase U2, V2, W2 sind bei dieser Ausführung jeweils parallel geschaltet.

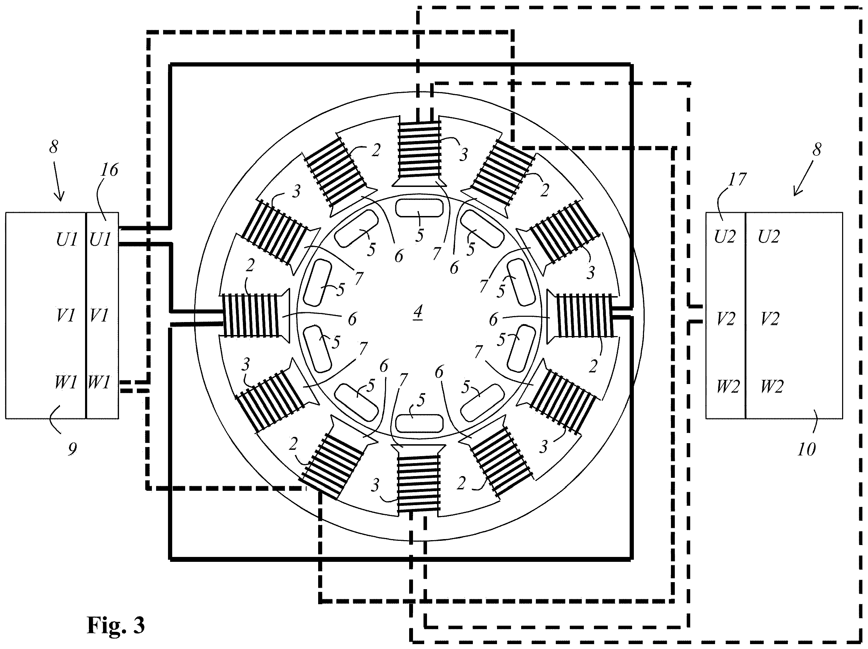

Fig. 3 zeigt ein zweites Ausführungsbeispiel eines erfindungsgemäßen Antriebssystems, das ein erfindungsgemäßes Elektromotorsystem 1 und eine elektronische Steuerungsvorrichtung 8 aufweist. Die Steuerungsvorrichtung 8 weist eine erste Antriebselektronik 9 auf, die die Bestromung der ersten Statorspulen 6 steuert und die mittels eines ersten Steckverbinders 16 an die ersten Statorspulen 6 angeschlossen sind. Die Steuerungsvorrichtung 8 weist außerdem eine zweite Antriebselektronik 10 auf, die die Bestromung der zweiten Statorspulen 7 steuert und die mittels eines zweiten Steckverbinders 17 an die zweiten Statorspulen 7 angeschlossen sind.

Die ersten Statorspulen 2 derselben Phase U1, V1, W1 und die zweiten Statorspulen 3 derselben Phase U2, V2, W2 sind bei dieser Ausführung jeweils in Reihe geschaltet. Der besseren Übersichtlichkeit halber sind exemplarisch und schematisch lediglich die Zuleitungen hinsichtlich der Phasen U1 und W1 des ersten Elektromotors und die Zuleitungen hinsichtlich der Phase V2 des zweiten Elektromotors eingezeichnet. Die übrigen ersten und zweiten Statorspulen (2, 3) sind analog genauso angeschlossen, was jedoch nicht eingezeichnet ist.

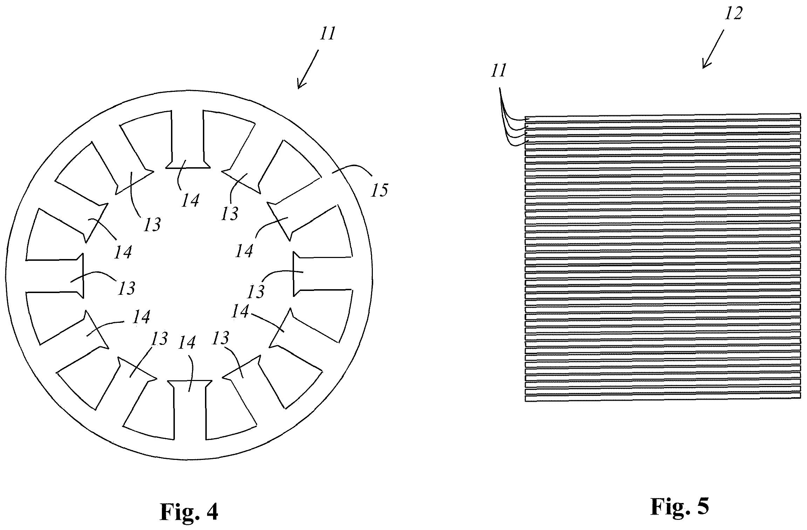

Fig. 4 zeigt ein Ausführungsbeispiel eines Elektroblechs 11 für einen geblechten Statorkern 12 eines erfindungsgemäßen Elektromotorsystems 1 in der Draufsicht. Das Elektroblech 11 ist dazu bestimmt, mit weiteren gleichen Elektroblechen 11 einen Stapel von Elektroblechen 11 und damit einen Statorkern 12 zu bilden, wie er in Figur 5 in einer Seitenansicht dargestellt ist.

Das Elektroblech 11 weist erste Abschnitte 13 auf, die dazu bestimmt sind, Bestandteil der ersten Wickelzähne 6 zu sein. Das Elektroblech 11 weist außerdem zweite Abschnitte 14 auf, die dazu bestimmt sind, Bestandteil der zweiten Wickelzähne 7 zu sein. Das Elektroblech 11 weist darüber hinaus einen ringförmigen Abschnitt 15 auf, an dessen Innenumfang die ersten Abschnitte 13 und zweiten Abschnitte 14 umlaufend abwechselnd angeordnet sind.

Das Elektroblech 11 ist einstückig, beispielsweise durch einen Stanzvorgang, hergestellt. Das Elektroblech 11 ist mit einem elektrischen isolierenden Isoliermittel überzogen.

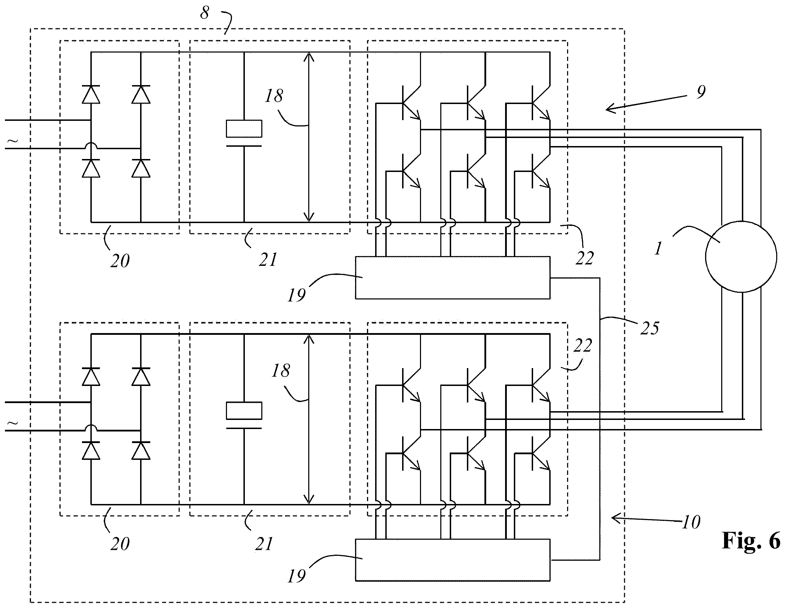

Fig. 6 zeigt ein drittes Ausführungsbeispiel eines erfindungsgemäßen Antriebssystems, das ein Elektromotorsystem 1 sowie eine elektronische Steuerungsvorrichtung 8, die eine erste Antriebselektronik 9 und eine zweite Antriebselektronik 10 beinhaltet.

Jede der Antriebselektroniken 9, 10 weist einen Eingangsstromrichter 20, einen Zwischenkreis 21 und einen Ausgangsstromrichter 22 auf. An einen der Ausgangsstromrichter 22, der jeweils mehrere Transistorgruppen beinhaltet, sind die ersten Statorspulen 2 des Elektromotorsystems 1 angeschlossen. An den anderen der Ausgangsstromrichter 22, der jeweils mehrere Transistorgruppen beinhaltet, sind die zweiten Statorspulen 3 des Elektromotorsystems 1 angeschlossen.

In dem Zwischenkreis 21 liegt eine Zwischenkreisspannung 18 an, die bei diesem Ausführungsbeispiel die Betriebsspannung ist.

Jede der Antriebselektroniken 9, 10 weist eine Transistorgruppensteuerung 19 zur Steuerung des Ausgangsstromrichters 22 auf.

Die Transistorgruppensteuerungen 19 sind über eine Synchronisationsleitung 23 miteinander verbunden und zueinander synchronisiert.

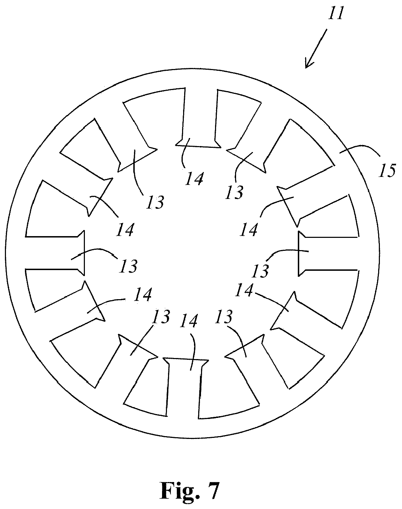

Figur 7 zeigt ein zweites Ausführungsbeispiel eines Elektroblechs 11 für einen geblechten Statorkern 12 eines erfindungsgemäßen Elektromotorsystems in der Draufsicht.

Das Elektroblech 11 ist dazu bestimmt, mit weiteren gleichen Elektroblechen 11 einen Stapel von Elektroblechen 11 und damit einen Statorkern 12 zu bilden.

Das Elektroblech 11 weist erste Abschnitte 13 auf, die dazu bestimmt sind, Bestandteil der ersten Wickelzähne 6 zu sein. Das Elektroblech 11 weist außerdem zweite Abschnitte 14 auf, die dazu bestimmt sind, Bestandteil der zweiten Wickelzähne 7 zu sein. Das Elektroblech 11 weist darüber hinaus einen ringförmigen Abschnitt 15 auf, an dessen Innenumfang die ersten Abschnitte 13 und zweiten Abschnitte 14 umlaufend abwechselnd angeordnet sind.
Zwischen zwei ersten Statorspulen (2) ist jeweils eine zweite Statorspule (3) angeordnet, wobei die Abstände der ersten Statorspulen (2) zu den unmittelbar benachbarten zweiten Statorspulen (3) jeweils verschieden sind.

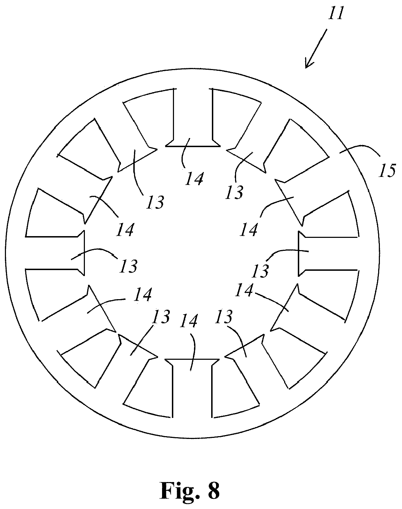

Figur 8 zeigt ein drittes Ausführungsbeispiel eines Elektroblechs 11 für einen geblechten Statorkern 12 eines erfindungsgemäßen Elektromotorsystems in der Draufsicht.

Das Elektroblech 11 ist dazu bestimmt, mit weiteren gleichen Elektroblechen 11 einen Stapel von Elektroblechen 11 und damit einen Statorkern 12 zu bilden.

Das Elektroblech 11 weist erste Abschnitte 13 auf, die dazu bestimmt sind, Bestandteil der ersten Wickelzähne 6 zu sein. Das Elektroblech 11 weist außerdem zweite Abschnitte 14 auf, die dazu bestimmt sind, Bestandteil der zweiten Wickelzähne 7 zu sein. Das Elektroblech 11 weist darüber hinaus einen ringförmigen Abschnitt 15 auf, an dessen Innenumfang die ersten Abschnitte 13 und zweiten Abschnitte 14 umlaufend abwechselnd angeordnet sind.

Zwischen zwei ersten Statorspulen (2) ist jeweils eine zweite Statorspule (3) angeordnet, was jedoch nicht zwingend so sein muss.

Die ersten Wickelzähne (6) sind zu den zweiten Wickelzähen (7) hinsichtlich der Größe ungleich ausgebildet.

### Bezugszeichenliste:

- 1: Elektromotorsystem
- 2: erste Statorspule
- 3: zweite Statorspule
- 4: Rotor
- 5: Permanentmagnet
- 6: erste Wickelzähne
- 7: zweite Wickelzähne
- 8: Steuerungsvorrichtung
- 9: erste Antriebselektronik
- 10: zweite Antriebselektronik
- 11: Elektroblech
- 12: Statorkern
- 13: erster Abschnitt
- 14: zweiter Abschnitt
- 15: ringförmiger Abschnitt
- 16: erster Steckverbinder
- 17: zweiter Steckverbinder
- 18: Zwischenkreisspannung
- 19: Transistorgruppensteuerung
- 20: Eingangsstromrichter
- 21: Zwischenkreis
- 22: Ausgangsstromrichter
- 23: Synchronisationsleitung

## Patentansprüche

1. Elektromotorsystem (1) beinhaltend einen ersten Elektromotor, der erste Statorspulen (2) aufweist, und beinhaltend einen zweiten Elektromotor, der zweite Statorspulen (3) aufweist, **dadurch gekennzeichnet, dass** der erste Elektromotor und der zweite Elektromotor denselben geblechten Statorkern (12) haben, der mehrere erste Wickelzähne (6), auf die ausschließlich die ersten Statorspulen (2) gewickelt sind, und mehrere zweite Wickelzähne (7), auf die ausschließlich die zweiten Statorspulen (3) gewickelt sind, aufweist.

2. Elektromotorsystem (1) nach Anspruch 1, **dadurch gekennzeichnet, dass**
a. der Statorkern (12) einen Stapel von Elektroblechen (11) beinhaltet, von denen jedes zumindest erste Abschnitte, die Bestandteil der ersten Wickelzähne (6) sind, und zweite Abschnitte, die Bestandteil der zweiten Wickelzähne (7) sind, aufweist, oder dass
b. der Statorkern (12) einen Stapel von Elektroblechen (11) beinhaltet, von denen jedes zumindest erste Abschnitte, die Bestandteil der ersten Wickelzähne (6) sind, und zweite Abschnitte, die Bestandteil der zweiten Wickelzähne (7) sind, aufweist, wobei jedes der Elektrobleche (11) einen ringförmigen Abschnitt (15) aufweist, an dessen Umfang, insbesondere Innenumfang, die ersten und zweiten Abschnitte umlaufend abwechselnd angeordnet sind.

3. Elektromotorsystem (1) nach Anspruch 1 oder 2, **dadurch gekennzeichnet, dass** das Elektromotorsystem (1) wenigstens eines der nachfolgenden Merkmale aufweist:
a. jede der ersten Statorspulen (2) ist jeweils ausschließlich auf einen einzigen ersten Wickelzahn gewickelt,
b. jede der zweiten Statorspulen (3) ist jeweils ausschließlich auf einen einzigen zweiten Wickelzahn gewickelt,
c. jeder erste Wickelzahn (6) trägt ausschließlich eine einzige der ersten Statorspulen (2),
d. jeder zweite Wickelzahn (7) trägt ausschließlich eine einzige der zweiten Statorspulen (3),
e. die ersten Statorspulen (2) unterscheiden sich von den zweiten Statorspulen (3) hinsichtlich wenigstens einer Eigenschaft, insbesondere hinsichtlich wenigstens einer der folgenden Eigenschaften: Windungszahl, Wickeldrahtdurchmesser, Wickeldrahtquerschnitt, Wickeldrahtmaterial, Wickelart, Betriebsspannung, Betriebsstrom..

4. Elektromotorsystem (1) nach einem der Ansprüche 1 bis 3, **dadurch gekennzeichnet, dass** die ersten Statorspulen (2) in eine erste elektrische Schaltung, insbesondere eine Sternschaltung oder eine Dreiecksschaltung, integriert sind und dass die zweiten Statorspulen (3) in eine von der ersten elektrischen Schaltung separate und/oder unabhängige zweite elektrische Schaltung, insbesondere eine Sternschaltung oder eine Dreiecksschaltung, integriert sind.

5. Elektromotorsystem (1) nach einem der Ansprüche 1 bis 4, **dadurch gekennzeichnet, dass** das Elektromotorsystem (1) wenigstens eines der nachfolgenden Merkmale aufweist:
a. der erste Elektromotor und der zweite Elektromotor weisen denselben Rotor (4) auf,
b. der erste Elektromotor und der zweite Elektromotor weisen denselben Rotor (4) auf, wobei der Rotor in Axialrichtung mindestens genauso lang ist, wie der gesamte Statorkern und/oder die ersten Statorspulen (2) und/oder die zweiten Statorspulen (3) und/oder die ersten Wickelzähne (6) und/oder die zweiten Wickelzähne (7),
c. der erste Elektromotor und der zweite Elektromotor weisen denselben Rotor (4) auf, wobei der Rotor mehrere, insbesondere in Umfangsrichtung symmetrisch und/oder äquidistant angeordnete, Permanentmagnete aufweist,
d. der erste Elektromotor und der zweite Elektromotor weisen denselben Rotor (4) auf, wobei der Rotor mehrere, insbesondere in Umfangsrichtung symmetrisch und/oder äquidistant angeordnete, Permanentmagnete aufweist, und wobei die ersten Statorspulen (2) im Betrieb des ersten Elektromotors mit sämtlichen Permanentmagneten zusammenwirken und dass die zweiten Statorspulen (3) im Betrieb des zweiten Elektromotors mit sämtlichen Permanentmagneten zusammenwirken.

6. Elektromotorsystem (1) nach einem der Ansprüche 1 bis 5, **dadurch gekennzeichnet, dass** das Elektromotorsystem (1) wenigstens eines der nachfolgenden Merkmale aufweist:
a. der erste Elektromotor ist für eine erste Betriebsspannung ausgelegt und der zweite Elektromotor ist für eine zweite Betriebsspannung ausgelegt, die von der ersten Betriebsspannung verschieden ist,
b. die ersten Statorspulen (2) sind dazu ausgebildet, jeweils bei einer ersten Betriebsspannung, insbesondere bei einer Betriebsspannung über 350 Volt, insbesondere von 400 Volt oder von 800 Volt, und bei einer ersten Betriebsstromstärke betrieben zu werden,
c. die zweiten Statorspulen (3) sind dazu ausgebildet, jeweils bei einer zweiten Betriebsspannung, insbesondere bei einer Betriebsspannung über 350 Volt, insbesondere von 400 Volt oder von 800 Volt, und bei einer zweiten Betriebsstromstärke betrieben zu werden.

7. Elektromotorsystem (1) nach einem der Ansprüche 1 bis 6, **dadurch gekennzeichnet, dass** das Elektromotorsystem (1) wenigstens eines der nachfolgenden Merkmale aufweist:
a. der Rotor (4) ist durch ausschließliches Bestromen der ersten Statorspulen (2) zur Rotation antreibbar,
b. der Rotor (4) ist durch ausschließliches Bestromen der zweiten Statorspulen (3) zur Rotation antreibbar,
c. der Rotor (4) ist durch gleichzeitiges Bestromen der ersten Statorspulen (2) und der zweiten Statorspulen (3) zur Rotation antreibbar.

8. Elektromotorsystem (1) nach einem der Ansprüche 1 bis 7, **dadurch gekennzeichnet, dass**
a. der erste Elektromotor als bürstenloser Gleichstrommotor oder als permanent erregter Synchronmotor ausgebildet ist, und/oder dass
b. der zweite Elektromotor als bürstenloser Gleichstrommotor oder als permanent erregter Synchronmotor ausgebildet ist.

9. Elektromotorsystem (1) nach einem der Ansprüche 1 bis 8, **dadurch gekennzeichnet, dass** das Elektromotorsystem (1) wenigstens eines der nachfolgenden Merkmale aufweist:
a. der erste Elektromotor ist als Mehrphasenmotor, insbesondere als Dreiphasenmotor, ausgebildet und der zweite Elektromotor ist als Mehrphasenmotor, insbesondere als Dreiphasenmotor, ausgebildet,
b. der erste Elektromotor ist als Mehrphasenmotor, insbesondere als Dreiphasenmotor, ausgebildet und der zweite Elektromotor ist als Mehrphasenmotor, insbesondere als Dreiphasenmotor, ausgebildet, wobei jeder der ersten Statorspulen (2) einer der Phasen zugordnet ist und dass jeder der zweiten Statorspulen (3) einer der Phasen zugordnet ist, wobei die Zuordnung der Phasen der ersten Statorspulen (2) zu der Zuordnung der Phasen der zweiten Statorspulen (3) drehversetzt ist,
c. zwischen zwei ersten Statorspulen (2) ist jeweils eine zweite Statorspule (3) angeordnet,
d. zwischen zwei ersten Statorspulen (2) ist jeweils eine zweite Statorspule (3) angeordnet, wobei die Abstände der ersten Statorspulen (2) zu den unmittelbar benachbarten zweiten Statorspulen (3) jeweils verschieden sind,
e. die Gesamtanzahl der ersten Statorspulen (2) ist von der Gesamtanzahl zweiten Statorspulen (3) verschieden,
f. die ersten Wickelzähne (6) sind zu den zweiten Wickelzähen (7), insbesondere hinsichtlich der Größe, ungleich ausgebildet.

10. Antriebssystem das ein Elektromotorsystem (1) nach einem der Ansprüche 1 bis 9 und eine elektronische Steuerungsvorrichtung (8) aufweist, insbesondere eine Steuerungsvorrichtung (8), die eine erste Antriebselektronik (9) aufweist, die die Bestromung der ersten Statorspulen (2) steuert, und/oder dass die Steuerungsvorrichtung (8) eine zweite Antriebselektronik (10) aufweist, die die Bestromung der zweiten Statorspulen (3) steuert.

11. Antriebssystem nach Anspruch 10, **dadurch gekennzeichnet, dass**
a. die erste Antriebselektronik (9) und die zweite Antriebselektronik (10) miteinander synchronisiert sind oder eine Synchronisierung einschaltbar ist, und/oder dass
b. der erste Elektromotor einen ersten Rotationslagesensor aufweist, der Messsignale an die erste Antriebselektronik (9) übermittelt, und dass der zweite Elektromotor einen zweiten Rotationslagesensor aufweist, der Messsignale an die zweite Antriebselektronik (10) übermittelt, und/oder dass
c. erste Elektromotor und der zweite Elektromotor einen gemeinsamen Rotationslagesensor aufweisen, der Messsignale an die erste Antriebselektronik (9) und an die zweite Antriebselektronik (10) übermittelt, und/oder dass
d. die erste Antriebselektronik (9) und die zweite Antriebselektronik (10) unterschiedliche Regelungsalgorithmen aufweisen.

12. Fahrzeugkomponente, die wenigstens ein Elektromotorsystem (1) nach einem der Ansprüche 1 bis 9 oder ein Antriebssystem nach Anspruch 10 oder 11 aufweist, insbesondere
a. Fahrzeugkomponente, die als Lenkung, insbesondere PKW-Lenkung, LKW-Lenkung, Servolenkung, Überlagerungslenkung und/oder eine Steer-by-Wire-Lenkung ausgebildet ist, oder
b. Fahrzeugkomponente, die als Fahrwerk, insbesondere aktives Fahrwerk für ein Kraftfahrzeug, ausgebildet ist.

13. Roboter, insbesondere Industrieroboter, beinhaltend wenigstens ein Elektromotorsystem (1) nach einem der Ansprüche 1 bis 9 oder ein Antriebssystem nach Anspruch 10 oder 11, oder Robotergelenk, das wenigstens ein Elektromotorsystem (1) nach einem der Ansprüche 1 bis 9 oder ein Antriebssystem nach Anspruch 10 oder 11 aufweist.

14. Fahrzeug, das wenigstens ein Elektromotorsystem (1) nach einem der Ansprüche 1 bis 9 oder ein Antriebssystem nach Anspruch 10 oder 11 aufweist, insbesondere
a. Fahrzeug das mehrere Elektromotorsysteme (1) nach einem der Ansprüche 1 bis 9 aufweist, wobei die Elektromotorsysteme (1) unterschiedliche Antriebsräder und/oder unterschiedliche Antriebsachsen des Fahrzeuges antreiben, oder
b. Fahrzeug, das als Flugzeug, insbesondere Fly-by-Wire-Flugzeug, ausgebildet ist.

15. Baumaschine, die wenigstens ein Elektromotorsystem (1) nach einem der Ansprüche 1 bis 9 oder ein Antriebssystem nach Anspruch 10 oder 11 aufweist.

16. Verwendung eines Elektromotorsystems (1) nach einem der Ansprüche 1 bis 9 als Generatorsystem.
